# EUROPÄISCHE PATENTSCHRIFT

(11) **EP 2 174 022 B1**
(45) Veröffentlichungstag und Bekanntmachung des Hinweises auf die Patenterteilung: **14.09.2011**
(21) Anmeldenummer: 08774026.2
(22) Anmeldetag: 18.07.2008
(51) Int. Cl.: F16B 19/10

(54) **BEFESTIGUNGSELEMENT ZUM VERBINDEN EINES TRÄGERTEILES MIT EINEM ANBAUTEIL**
FASTENING ELEMENT FOR CONNECTING A SUPPORT PART TO AN ADD-ON PART
ÉLÉMENT DE FIXATION DESTINÉ À ASSEMBLER UN ÉLÉMENT SUPPORT ET UN ÉLÉMENT À RAPPORTER

(30) Priorität: 25.07.2007 DE 102007034785
(43) Veröffentlichungstag der Anmeldung: 14.04.2010
(73) Patentinhaber: A. RAYMOND ET CIE, 38000 Grenoble (FR)
(72) Erfinder: BÜSCH, Martin, 79588 Efringen-Kirchen (DE); SILBEREISEN, Friedrich, 79588 Efringen-Kirchen (DE)
(74) Vertreter: Rüttgers, Joachim
(86) Internationale Anmeldenummer: PCT/EP2008/005921
(87) Internationale Veröffentlichungsnummer: WO 2009/012947

(56) Entgegenhaltungen:
- DE-A1- 19 816 533
- DE-C2- 3 424 075
- JP-A- 61 167 708

## Beschreibung

Die Erfindung betrifft ein Befestigungselement zum Verbinden eines Trägerteiles mit einem Anbauteil gemäß dem Oberbegriff des Patentanspruches 1.

Ein derartiges Befestigungselement ist aus DE 34 24 075 C2 bekannt. Das vorbekannte Befestigungselement zum Verbinden eines Trägerteiles mit einem Anbauteil verfügt über ein in eine Klemmausnehmung des Trägerteiles einzufügenden Halteteil, das einen Auflageteller und eine Anzahl von gegenüber dem Auflageteller radial nach innen versetzte, an dem Auflageteller angeformte Spreizwangen aufweist. Die Spreizwangen verfügen jeweils über eine in einem Abstand von dem Auflageteller radial nach innen vorstehende Aufgleitwulst. Weiterhin ist das gattungsgemäße Befestigungselement mit einem länglichen Verriegelungsteil ausgestattet, das durch eine in dem Auflageteller mit einer Führungswand bündig mit dem Verriegelungsteil ausgebildeten Führungsausnehmung mit einem Schaftabschnitt zwischen die Spreizwangen in das Halteteil einschiebbar ist. Dabei bewegt das Verriegelungsteil bei Auflaufen auf die Aufgleitwulst die Spreizwangen radial nach außen, so dass ein zwischen dem Trägerteil und dem Auflageteller angeordnetes Anbauteil aufgrund der Klemmwirkung mit dem Trägerteil verbunden ist.

Aus JP 61 167708 A ist ein Befestigungselement zum Verbinden eines Trägerteiles mit einem Anbauteil bekannt, das über ein in eine Klemmausnehmung des Trägerteiles einzufügendes Halteteil verfügt. Das Halteteil weist einen Auflageteller und eine Anzahl von gegenüber den Auflageteller radial nach innen versetzte sowie an dem Auflageteller angeformte Spreizwangen auf. Die Spreizwangen sind in relaxierter Anordnung mit auf einer Zylinderfläche liegenden Außenwänden ausgestattet und verfügen jeweils über eine in einem Abstand von dem Auflageteller radial nach innen vorstehende Aufgleitwulst. Weiterhin ist dieses Befestigungselement mit einem länglichen Verriegelungsteil ausgestattet, das einen gegenüber dem innenseitigen Abstand der Spreizwangen in einem in Einführrichtung vor den Aufgleitwülsten liegenden Bereich kleineren Durchmesser aufweist und damit mit einem gewissen Spiel in das Halteteil einfügbar ist. Bei Auflaufen des Verriegelungsteiles auf die Aufgleitwülste spreizen sich die Spreizwangen nach außen auf.

Aus DE 198 16 533 A1 ist eine Innenverkleidung bekannt, die über in einer Klemmausnehmung eines dünnen Türinnenbleches einzufügende Spreizwangen verfügt, deren Außenwände auf einer Zylinderfläche liegen. Weiterhin ist ein längliches Verriegelungsteil vorhanden, das über einen paddelförmigen Endabschnitt mit zwei unterschiedlichen Breitendimensionen verfügt. In einem Endabschnitt der Spreizwangen sind Aufgleitwülste und ein Hohlraum ausgebildet, dessen Durchmesser ungefähr der größten Breite des paddelförmigen Endabschnitts des Verriegelungsteiles entspricht, so dass dieses bei relaxierten Spreizwangen mit verhältnismäßig geringen Einfügekräften einschiebbar und zum Aufspreizen der Spreizwangen in einer Endstellung so drehbar ist, dass die größere Breite des paddelförmigen Endabschnittes auf die Aufgleitwülste einwirkt.

Der Erfindung liegt die Aufgabe zugrunde, ein Befestigungselement der eingangs genannten Art anzugeben, das sich auch bei größeren Toleranzen in den Dimensionen einer Klemmausnehmung in dem Trägerteil selbst im unteren Toleranzbereich bei einer verhältnismäßig geringen Einfügekraft des Verriegelungsteiles durch eine hohe Klemmwirkung mit einer hohen Auszugskraft auszeichnet.

Diese Aufgabe wird bei einem Befestigungselement der eingangs genannten Art erfindungsgemäß mit den kennzeichnenden Merkmalen des Patentanspruches 1 gelöst.

Dadurch, dass zwischen der Führungsausnehmung und den Aufgleitwülsten an jeder Spreizwange eine gegenüber der Führungswand radial nach außen zurücktretende Freiwand ausgebildet ist, taucht der Schaftabschnitt auch dann im Wesentlichen kräftefrei nach Durchtritt durch die Führungsausnehmung zwischen die Spreizwangen ein, wenn diese aufgrund einer in dem Trägerteil verhältnismäßig knapp bemessenen Durchsteckausnehmung gegenüber ihrer Ruhestellung nach innen eingebogen sind. Aufgrund des selbst bei einer an sich nicht vorgesehenen Einbiegung der Spreizwangen sowie um so mehr bei einer im Wesentlichen wechselwirkungsfreien Anordnung des Halteteiles in einer Durchsteckausnehmung eines Trägerteiles wirkt ein in Einschieberichtung des Befestigungsteiles vorderseitig liegendes Fußende erst in einem gewissen Abstand von dem Auflageteller auf die Spreizwangen ein, so dass aufgrund des dann günstigen Hebelverhältnisses mit verhältnismäßig geringen Einschiebekräften hohe Klemmkräfte hervorgerufen werden.

Weitere zweckmäßige Ausgestaltungen der Erfindung sind Gegenstand der Unteransprüche.

Nachfolgend wird die Erfindung anhand von Ausführungsbeispielen mit Bezug auf die Figuren der Zeichnung näher erläutert. Es zeigen:
- Fig. 1: in einer perspektivischen Ansicht ein erstes Ausführungs- beispiel eines erfindungsgemäßen Befestigungselementes mit einem Halteteil und einem Verriegelungsteil,
- Fig. 2: in einer Schnitteinsicht das Ausführungsbeispiel gemäß Fig. 1 mit dem Verriegelungsteil in einer Vormontagestel- lung,
- Fig. 3: in einer Schnittansicht das Ausführungsbeispiel gemäß Fig. 1 mit dem Verriegelungsteil in einer Endmontagestellung,
- Fig. 4: in einer perspektivischen Ansicht ein weiteres Ausfüh- rungsbeispiel eines erfindungsgemäßen Befestigungsele- mentes mit einem Halteteil und mit einem ein Rastmittel aufweisenden Verriegelungsteil,
- Fig. 5: in einer Schnittansicht das Ausführungsbeispiel gemäß Fig. 4 in einer Endmontagestellung des Verriegelungsteiles in Verbindung mit einer ersten Ausgestaltung von Dichtungs- elementen und
- Fig. 6: in einer Schnittansicht das Ausführungsbeispiel gemäß Fig. 4 in einer Endmontagestellung des Verriegelungsteiles in Verbindung mit einer zweiten Ausgestaltung von Dich- tungselementen.

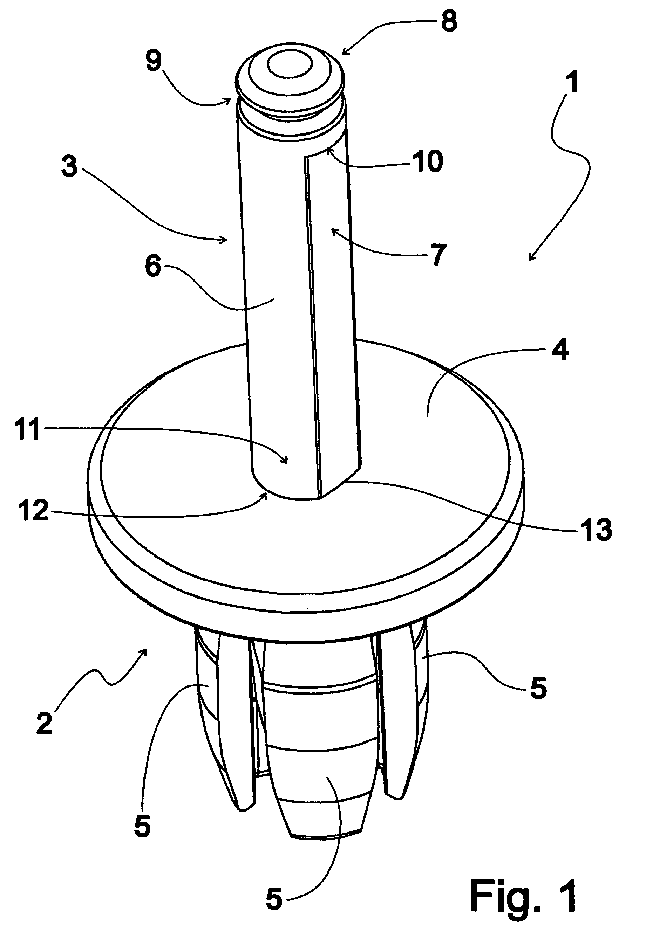

Fig. 1 zeigt in einer perspektivischen Ansicht ein erstes Ausführungsbeispiel eines erfindungsgemäßen, aus einem hartelastischen Kunststoffmaterial hergestellten Befestigungselementes 1, das ein Halteteil 2 und ein verschiebbar in dem Halteteil 2 gelagertes längliches Verriegelungsteil 3 aufweist. Das Halteteil 2 verfügt über einen scheibenartigen flachen Auflageteller 4, an dem auf einer Seite eine Anzahl von umfänglich um das Verriegelungsteil 3 angeordnete Spreizwangen 5 angeformt sind. Das Verriegelungsteil 3 weist einen Schaftabschnitt 6 auf, der bis auf eine zur Verdrehsicherung dienenden plane Abflachung 7 zylinderförmig ist. Die Abflachung 7 erstreckt sich von einem Kopfabschnitt 8, der mit einer als Griffhilfe dienenden umlaufenden Ringnut 9 ausgebildet ist, unter Ausbildung einer Anschlagstufe 10 bis zu einem dem Kopfabschnitt 8 gegenüberliegenden Fußabschnitt 11, der in der Anordnung gemäß Fig. 1 in eine in dem Auflageteller 4 ausgebildete Führungsausnehmung 12 eingefügt ist. Die Führungsausnehmung 12 ist mit einer Führungswand 13 ausgebildet, die den Schaftabschnitt 6 bündig umschließt, so dass das Verriegelungsteil 3 im Wesentlichen spielfrei von der Führungsausnehmung 12 geführt in dem Halteteil 2 bis zum Anschlag der Anschlagstufe 10 an dem Auflageteller 4 in das Halteteil 2 einschiebbar ist.

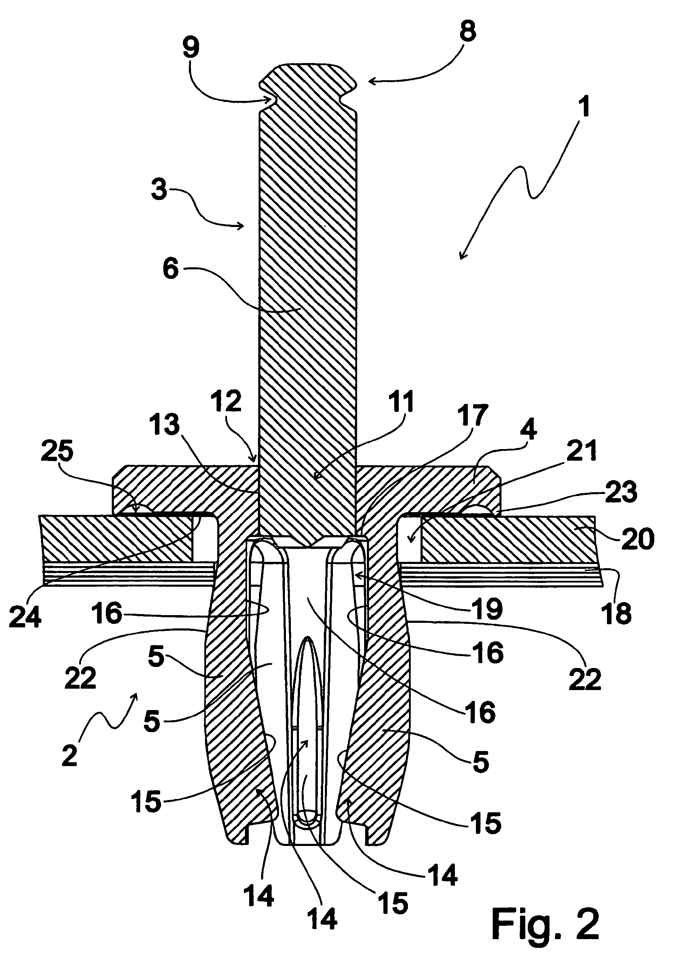

Fig. 2 zeigt in einer Schnittansicht das Ausführungsbeispiel gemäß Fig. 1 mit dem Verriegelungsteil 3 in einer ausgefahrenen Vormontagestellung, in der der Fußabschnitt 11 in der Führungsausnehmung 12 angeordnet ist. Aus Fig. 2 ist ersichtlich, dass die Spreizwangen 5 in einem Abstand von dem Auflageteller 4 mit radial nach innen vorstehenden Aufgleitwülsten 14 ausgebildet sind, die in Längsrichtung des Befestigungselementes 1 eine von ihrem dem Auflageteller 4 zugewandten Ende zu dem von dem Auflageteller 4 weg weisenden Ende radial nach innen flach ansteigende Aufgleitwand 15 aufweisen. Weiterhin lässt sich der Darstellung gemäß Fig. 2 entnehmen, dass zwischen dem Auflageteller 4 und den Aufgleitwülsten 14 an jeder Spreizwange 5 eine radial gegenüber der Führungswand 13 nach außen zurücktretende Freiwand 16 sowie eine sich von der Führungswand 13 bis zu den Freiwänden 16 erstreckende, im Wesentlichen rechtwinklig zu der Führungswand 13 ausgerichtete, sich umfänglich erstreckende Rücksprungwand 17 ausgebildet sind.

In der Darstellung gemäß Fig. 2 ist das Befestigungselement 1 in eine in einem Trägerteil 18 ausgebildete Klemmausnehmung 19 sowie durch eine in einem Anbauteil 20 angebrachte Durchsteckausnehmung 21 eingefügt, wobei in dieser Anordnung der Auflageteller 4 an dem Anbauteil 20 anliegt und die Spreizwangen 5 aufgrund einer sich beginnend von einem in etwa der Dicke des Anbauteiles 20 entsprechenden Abstand von dem Auflageteller 4 radial nach außen erweiternden Außenwand 22 mit einer der Federkraft der Spreizwangen 5 gegenüber Einfedern entsprechenden Vormontagehaltekraft an dem Trägerteil 18 fixiert ist.

Weiterhin lässt sich Fig. 2 entnehmen, dass der Auflageteller 4 auf der den Spreizwangen 5 zugewandten Seite eine radial außen umlaufende Abdichtlippe 23 aufgrund des einkomponentigen Aufbaus dieses Ausführungsbeispiels als hartelastisches Dichtmittel aufweist, die in axialer Richtung etwas über eine den Spreizwangen 5 zugewandte Bodenwand 24 vorsteht und radial innenseitig von einer umlaufenden, kreissegmentartig vertieften Randnut 25 zum Erzielen einer gewissen Verformbarkeit der Abdichtlippe 23 begrenzt ist.

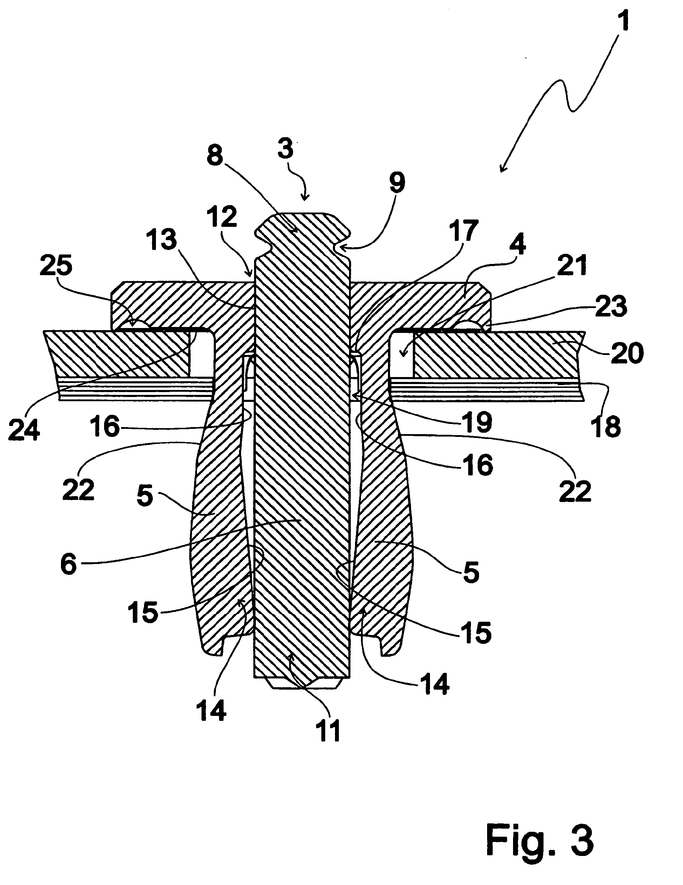

Fig. 3 zeigt das anhand Fig. 1 und Fig. 2 erläuterte Ausführungsbeispiel mit dem Verriegelungsteil 3 in einer in das Halteteil 2 eingeschobenen Endmontagestellung. Aus Fig. 3 ist ersichtlich, dass zwischen dem Kopfabschnitt 8 des Verriegelungsteiles 3 und jeder Freiwand 16 in radialer Richtung ein Abstand vorhanden ist, der dazu führt, dass der Fußabschnitt 11 selbst bei radial nach innen vorgespannten Spreizwangen 5 beispielsweise aufgrund einer im unteren Toleranzbereich dimensionierten Klemmausnehmung 19 erst nach einem gewissen, im Wesentlichen kräftefrei zurückgelegten Einschiebeweg von beispielsweise etwa einem Drittel der Länge der Spreizwangen 5 in axialer Richtung mit den Aufgleitwänden 15 der Aufgleitwülste 14 in Kontakt kommt und die Spreizwangen 5 unter Verklemmung des Halteteiles 2 in der Klemmausnehmung 19 des Trägerteiles 18 aufweitet. Aufgrund der Klemmwirkung nach Aufweiten der Spreizwangen 5 in radialer Richtung ist das Befestigungselement 1 mit einer hohen Auszugskraft stabil in dem Trägerteil 18 verankert, wobei die Abdichtlippe 23 etwas vorgespannt bündig an dem Anbauteil 20 aufliegt und somit die Klemmausnehmung 19 und die Durchsteckausnehmung 21 abdichtet.

Weiterhin ist aufgrund des Einwirkens des Fußabschnittes 11 auf die Aufgleitwülste 14 in einem verhältnismäßig großen Abstand von dem Auflageteller 4 ein günstiges Hebelverhältnis zum Aufweiten der Spreizwangen 5 erzielt, das selbst dann erhalten bleibt, wenn die Spreizwangen 5 aufgrund eines gegenüber dem Solldurchmesser zu kleinen Durchmessers der Klemmausnehmung 19 radial nach innen gebogen und übermäßig vorgespannt sind.

Zum Lösen des Befestigungselementes aus dem Eingriff mit dem Trägerteil 18 lässt sich beispielsweise mit zwei Fingern oder mit einem Greifwerkzeug das Verriegelungsteil 3 vorzugsweise im Bereich der Ringnut 9 ergreifen und von der in Fig. 3 dargestellten Endmontagestellung in die in Fig. 2 dargestellte Vormontagestellung zurückbewegen, so dass das Befestigungselement 1 wieder von dem Trägerteil 18 entfernbar ist.

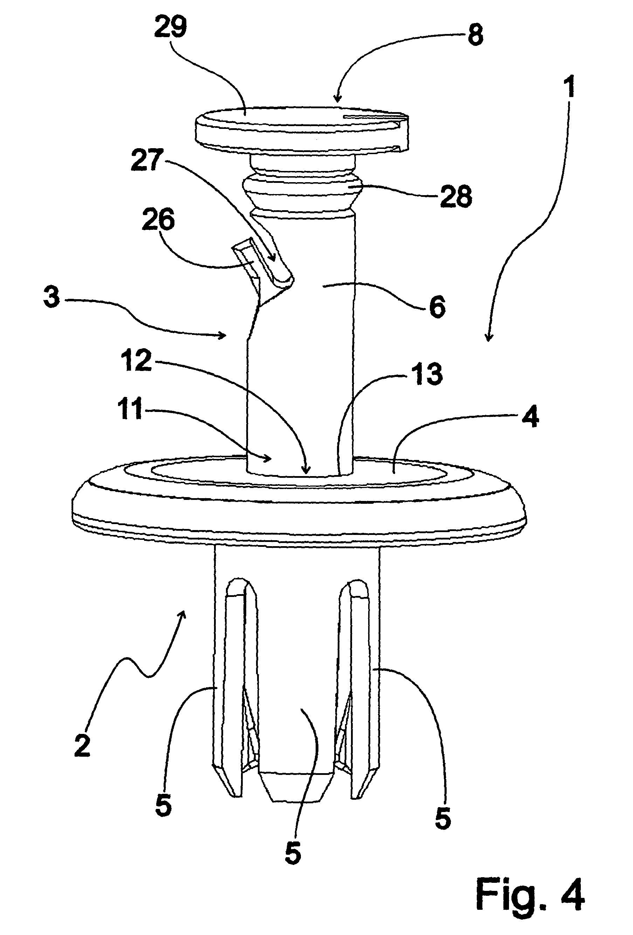

Fig. 4 zeigt in einer perspektivischen Ansicht ein weiteres Ausführungsbeispiel eines erfindungsgemäßen Befestigungselementes 1, wobei sich in Fig. 1 bis Fig. 3 sowie in Fig. 4 entsprechende Elemente mit den gleichen Bezugszeichen versehen und im Weiteren nicht näher erläutert sind. Fig. 3 lässt sich entnehmen, dass an dem Schaftabschnitt 6 des Verriegelungsteiles 3 bei dem zweiten Ausführungsbeispiel als Rastmittel eine sich in Richtung des Kopfabschnittes 8 erstreckende, radial über den Schaftabschnitt 6 überstehende elastische Rastzunge 26 angeformt ist, die in Richtung des Schaftabschnittes 6 in eine Freimachung 27 eintauchen kann.

Bei dem zweiten Ausführungsbeispiel gemäß Fig. 4 ist in dem Kopfabschnitt 8 des Verriegelungsteiles 3 eine umlaufende elastische Kopfdichtung 28 von weichelastischen Dichtmitteln ausgebildet, die ebenfalls radial nach außen über den Schaftabschnitt 6 übersteht. Schließlich weist der Kopfabschnitt 8 bei dem zweiten Ausführungsbeispiel auf der dem Schaftabschnitt 6 abgewandten Seite einen Kopfteller 29 auf, der radial ebenfalls über den Schaftabschnitt 6 hinausragt.

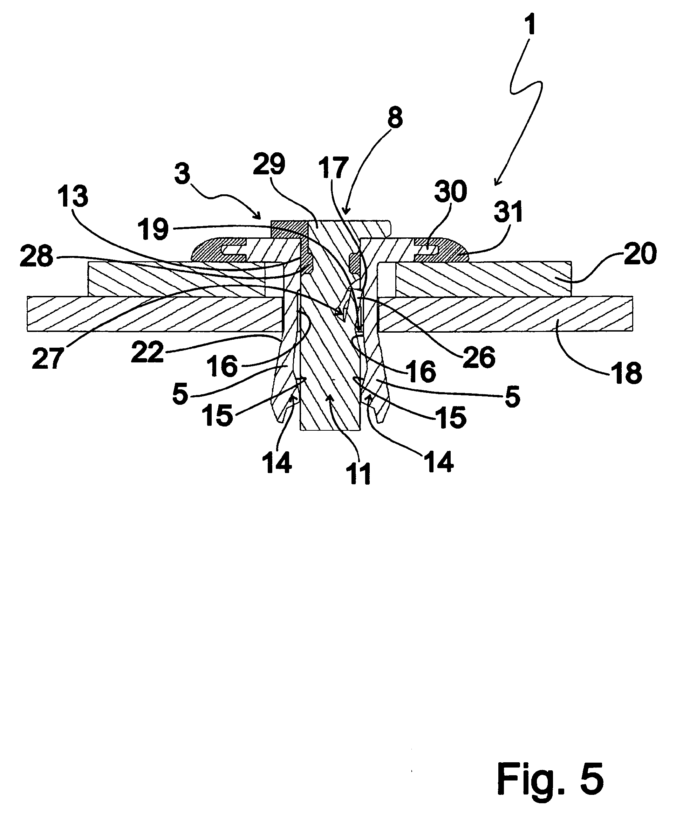

Fig. 5 zeigt das zweite Ausführungsbeispiel gemäß Fig. 4 nach Überführen des Verriegelungsteiles 3 von der in Fig. 4 dargestellten Vormontagestellung in eine Endmontagestellung, in der aufgrund entsprechenden Einrichtens des Abstandes zwischen dem freien Ende der Rastzunge 26 und der der Rastzunge 26 zugewandten Seite des Kopftellers 29 die Rastzunge 26 die Rücksprungwand 17 hintergreift und damit das Verriegelungsteil 3 bis zu einer das Befestigungselement 1 mit einer hohen Auszugskraft in dem Halteteil 2 verriegelt. In der Endmontagestellung ist die Kopfdichtung 28 durch Anlage an der Führungswand 13 der Führungsausnehmung 12 verpresst.

Weiterhin lässt sich Fig. 5 entnehmen, dass in einer ersten Ausgestaltung der Dichtmittel an einem radial außenseitig des Kopftellers 29 ausgebildeten umlaufenden Randsteg 30 eine elastische Kragenlippe 31 aus einer Weichkomponente angeformt ist, die eine radiale Erstreckung aufweist, die in etwa der radialen Erstreckung der den Spreizwangen 5 zugewandten Seite des Auflagetellers 4 entspricht. Dadurch ist eine verhältnismäßig große Auflagefläche der Kragenlippe 31 an dem Anbauteil 20 vorhanden, was zu einer guten Dichtwirkung wird.

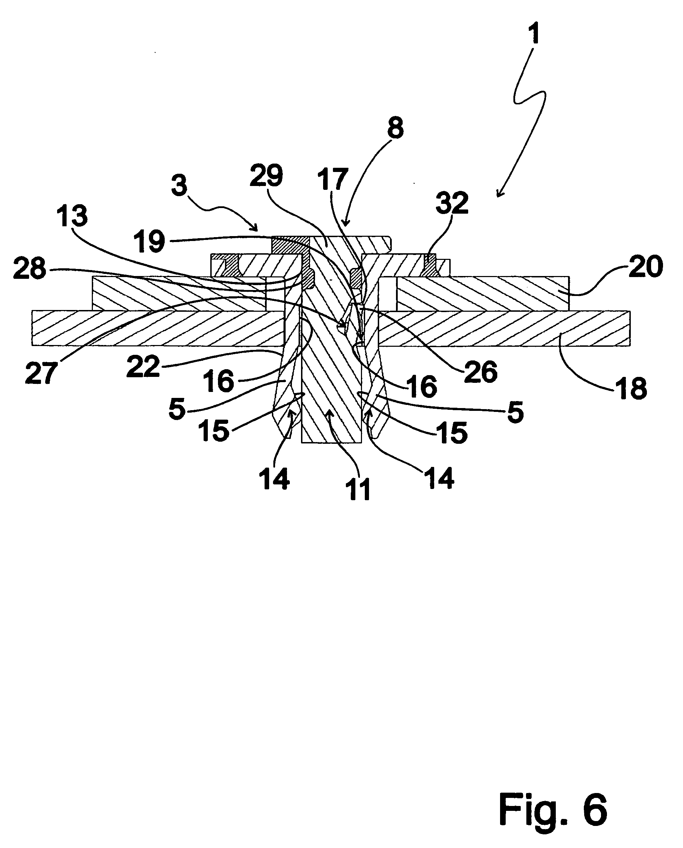

Fig. 6 zeigt das zweite Ausführungsbeispiel gemäß Fig. 4 und Fig. 5 mit einer weiteren Ausführung von Dichtmitteln. In der Ausführung gemäß Fig. 6 weisen die Dichtmittel im radial außenseitigen Randbereich des Auflagetellers 4 eine bündig mit einer glatten stirnseitigen Außenwand des Auflagetellers 4 verbundene Steglippe 32 aus einer Weichkomponente auf, die bei einem gegenüber der Ausführung gemäß Fig. 5 geringeren Materialaufwand eine immer noch zufriedenstellende Dichtwirkung herbeiführt.

## Patentansprüche

1. Befestigungselement zum Verbinden eines Trägerteiles (18) mit einem Anbauteil (20) mit einem Halteteil (2), das einen Auflageteller (4) und eine Anzahl von gegenüber dem Auflageteller (4) radial nach innen versetzte, an den Auflageteller (4) angeformte Spreizwangen (5) aufweist, wobei die Spreizwangen (5) jeweils über eine in einem Abstand von dem Auflageteller (4) radial nach innen vorstehende Aufgleitwulst (14) und jeweils über eine sich radial nach außen erweiternde Außenwand (22) verfügen, und mit einem länglichen Verriegelungsteil (3), das mit einem Schaftabschnitt (6) durch eine in dem Auflageteller (4) mit einer Führungswand (13) bündig mit dem Schaftabschnitt (6) ausgebildete Führungsausnehmung (12) zwischen die Spreizwangen (5) in das Halterteil (2) einschiebbar ist, wobei das Verriegelungsteil (3) bei Auflaufen auf die Aufgleitwülste (14) die Spreizwangen (5) radial nach außen bewegt, **dadurch gekennzeichnet, dass** zwischen der Führungsausnehmung (12) und den Aufgleitwülsten (14) an jeder Spreizwange (5) angrenzend an den Auflageteller (4) eine gegenüber der Führungswand (13) der Führungsausnehmung (12) radial nach außen versetzte Freiwand (16) ausgebildet ist.

2. Befestigungselement nach Anspruch 1, **dadurch gekennzeichnet, dass** sich jede Freiwand (16) von dem Auflageteller (4) bis zu den Aufgleitwülsten (14) erstreckt.

3. Befestigungselement nach Anspruch 1 oder Anspruch 2, **dadurch gekennzeichnet, dass** das Verriegelungsteil (3) zwischen einem dem Halteteil (2) abgewandten Kopfabschnitt (8) und dem Schaftabschnitt (6) eine Ringnut (9) aufweist.

4. Befestigungselement nach einem der Ansprüche 1 bis 3, **dadurch gekennzeichnet, dass** in dem Schaftabschnitt (6) eine elastische, radial über den Schaftabschnitt (6) überstehende Kopfdichtung (28) von Dichtmitteln ausgebildet ist, die in einer eingeschobenen Stellung des Verriegelungsteiles (3) an der Führungswand (13) anliegt.

5. Befestigungselement nach einem der Ansprüche 1 bis 4, **dadurch gekennzeichnet, dass** zwischen dem Auflageteller (4) und der Freiwand (16) wenigstens an der Spreizwange (5) eine rechtwinklig oder steil zu der Freiwand (16) stehende Rücksprungwand (17) ausgebildet ist und dass in dem Schaftabschnitt (6) ein elastisches Rastmittel (26) ausgebildet ist, das in einer Endmontagestellung des Verriegelungsteils (3) die Rücksprungwand (17) hinterrastet.

6. Befestigungselement nach Anspruch 5, **dadurch gekennzeichnet, dass** an dem Auflageteller (4) elastische Dichtmittel (31, 32) ausgebildet sind, die bei Hinterrasten der Rücksprungwand (17) durch das Rastmittel (26) in einer Endmontagestellung verformt an einem Anbauteil (20) anliegen.

## Claims

1. Fastener for connecting a supporting part (18) to an added part (20), having a retaining part (2) which has a supporting disc (4) and a plurality of splayable legs (5) integrally formed on the supporting disc (4) which are offset inwards radially from the supporting disc (4), the splayable legs (5) each having a hump (14) for supporting sliding movement which projects radially inwards at a distance from the supporting disc (4) and each having an outer wall (22) which widen outwards radially, and having an elongated locking member (3) of which a shank portion (6) can be inserted between the sprayable legs (5) and into the retaining part (2) through a guiding opening (12) which is formed in the supporting disc (4) to have a guiding wall (13) which rests flush against the shank portion (6), the locking part (3) moving the splayable legs (5) outwards radially as it moves over the humps (14) for supporting sliding movement, **characterised in that** there is formed in each splayable leg (5), between the guiding opening (12) and the humps (14) for supporting sliding movement and adjacent to the supporting disc (4), a free wall (16) which is offset outwards radially from the guiding wall (13) of the guiding opening (12).

2. Fastener according to claim 1, **characterised in that** each free wall (16) extends from the supporting disc (4) to the humps (14) for supporting sliding movement.

3. Fastener according to claim 1 or claim 2, **characterised in that** the locking part (3) has an annular groove (9) between a head portion (8) remote from the retaining part (2) and the shank portion (6).

4. Fastener according to one of claims 1 to 3, **characterised in that** there is formed in the shank portion (6) an elastic head seal (28) comprising sealing means which projects beyond the shank portion (6) radially and which rests against the guiding wall (13) when the locking part (3) is in a pushed-in position.

5. Fastener according to one of claims 1 to 4, **characterised in that**, between the supporting disc (4) and the free wall (16), there is formed, at least in the splayable leg (5), an undercut wall (17) which is at right angles or at a steep angle to the free wall (16), and **in that** there is formed in the shank portion (6) an elastic latching means (26) which latches behind the undercut wall (17) when the locking part (3) is in a fully engaged position.

6. Fastener according to claim 5, **characterised in that** there are formed on the supporting disc (4) elastic sealing means (31, 32) which, when the latching means (26) latches behind the undercut wall (17) in a fully engaged position, rest against an added part (20) in a deformed form.

## Revendications

1. Organe de fixation pour l'assemblage d'un élément faisant office de support (18) avec un élément rapporté (20), comprenant un élément de retenue (2) qui se compose d'une collerette d'appui (4) et d'un certain nombre de segments expansibles (5) qui sont réalisés solidaires par moulage de la collerette d'appui (4) et qui sont décalés vers l'intérieur dans le plan radial par rapport à la collerette d'appui (4), les segments expansibles (5) étant en l'occurrence respectivement munis, à une certaine distance de la collerette d'appui (4), d'un renflement de glissement (14) faisant saillie dans le plan radial vers l'intérieur et comportant respectivement une paroi extérieure (22) allant en s'évasant dans le plan radial vers l'extérieur, et comprenant un élément de verrouillage de forme allongée (3) qui est destiné à être poussé, au niveau de sa portion formant tige (6), au travers d'un évidement de guidage (12) par une paroi de guidage (13) en affleurement de la portion formant tige (6), en position d'emmanchement entre les segments expansibles (5), dans l'élément de retenue (2), l'élément de verrouillage (3) repoussant en l'occurrence les segments expansibles (5) dans le plan radial vers l'extérieur lors de sa montée le long du renflement de glissement (14), **caractérisé en ce qu'**il est prévu, sur chaque segment expansible (5), entre l'évidement de guidage (12) et le renflement de glissement (14), dans une position attenante à la collerette d'a ppui (4), une paroi en dégagement (16) décalée vers l'extérieur dans le plan radial par rapport à la paroi de guidage (13) de l'évidement de guidage (12).

2. Organe de fixation selon la revendication 1, **caractérisé en ce que** chaque paroi de dégagement (16) s'étend depuis la collerette d'appui (4) jusqu'aux renflements de glissement (14).

3. Organe de fixation selon la revendication 1 ou la revendication 2, **caractérisé en ce que** l'élément de verrouillage (3) est muni d'une gorge circulaire (9) ménagée entre une portion formant tête (8), se trouvant à l'opposé de l'élément de retenue (2), et la portion formant tige (6).

4. Organe de fixation selon l'une des revendications 1 à 3, **caractérisé en ce qu'**il est prévu, dans la portion formant tige (6), une étanchéité de tête élastique (28) constituée par des moyens d'étanchéité, qui fait saillie dans le plan radial au-dessus de la portion formant tige (6) et qui, lorsque l'élément de verrouillage (3) est poussé dans sa position d'emmanchement, est en contact d'application contre la paroi de guidage (13).

5. Organe de fixation selon l'une des revendications 1 à 4, **caractérisé en ce qu'**il est prévu, entre la collerette d'appui (4) et la paroi en dégagement (16), au moins au niveau du segment expansible (5) une paroi formant retrait (17) disposée perpendiculairement ou verticalement par rapport à la paroi en dégagement (16) et **en ce qu'**il est prévu dans la portion formant tige (6) un organe d'accrochage élastique (26) qui, lorsque l'élément de verrouillage (3) est inséré dans sa position de montage en fin de course, vient s'engager par derrière en prise d'encastrement avec la paroi formant retrait (17).

6. Organe de fixation selon la revendication 5, **caractérisé en ce qu'**il est prévu, sur la collerette d'appui (4), des éléments d'étanchéité élastiques (31, 32) qui, lorsque l'organe d'accrochage (26) vient cramponner par derrière la paroi formant retrait (17) dans la position de montage en position de fin de course, viennent s'appliquer en se déformant sur l'élément rapporté (20).
